# EUROPÄISCHE PATENTSCHRIFT

(11) **EP 1 870 390 B1**
(45) Veröffentlichungstag und Bekanntmachung des Hinweises auf die Patenterteilung: **14.01.2009**
(21) Anmeldenummer: 07109968.3
(22) Anmeldetag: 11.06.2007
(51) Int. Cl.: C07B 63/00, C12P 7/02

(54) **Aufarbeitung von Reaktionslösungen aus Ganzzell-Biotransformationen**
Preparing reaction solutions from whole cell biotransformations
Rénovation de solutions de réaction à partir de biotransformations à cellules totales

(30) Priorität: 21.06.2006 DE 102006028817
(43) Veröffentlichungstag der Anmeldung: 26.12.2007
(73) Patentinhaber: Evonik Degussa GmbH, 45128 Essen (DE)
(72) Erfinder: Gröger, Harald, 91056, Erlangen (DE); Rollmann, Claudia, 63755, Alzenau (DE); Werner, Helge, 63486, Bruchköbel (DE); Chamouleau, Francoise-Christine, 16340, L'Isle d'Espagnac (FR); Orzewski, Dittmar, 63128, Dietzenbach (DE)

(56) Entgegenhaltungen:
- DE-A1-8102004 043 74
- YAZBECK D R ET AL: "Challenges in the development of an efficient enzymatic process in the pharmaceutical industry" TETRAHEDRON: ASYMMETRY, ELSEVIER SCIENCE PUBLISHERS, AMSTERDAM, NL, Bd. 15, Nr. 18, 20. September 2004 (2004-09-20), Seiten 2757-2763, XP004575045 ISSN: 0957-4166

## Beschreibung

Die Erfindung betrifft ein Verfahren zur Aufarbeitung von Reaktionslösungen, enthaltend Ganzzellkatalysatoren, eine wässrige Komponente und eine organische Komponente, wobei die organische Komponente das anzureichernde Produkt enthält. Insbesondere ist die vorliegende Erfindung auf ein Verfahren zur Aufarbeitung von aus Ganzzellbiotransformationen resultierenden Reaktionslösungen, enthaltend Ganzzellkatalysatoren, eine wässrige Komponente und eine organische Komponente mit einem Anteil von >50 g/L am Gesamtvolumen, gerichtet.

Biotransformationen mit Ganzzellkatalysatoren (u.a. auch Ganzellbiokatalysatoren genannt) haben sich als hochattraktive Herstellungsmethoden für die Synthese von Feinchemikalien erwiesen (als Übersicht siehe z.B.: S. Buchholz, H. Gröger, "Ganzellbiokatalyse" in: Angewandte Mikrobiologie, Kapitel 8, Springer-Verlag, Berlin, 2006, S. 161f.). Im Vergleich zu isolierten, insbesondere gereinigten Enzymen, stellen rekombinante Ganzzellkatalysatoren oftmals einen kostenattraktiveren Katalysatortyp dar, da Aufarbeitungs- und Reinigungsschritte bei der Gewinnung des Ganzzellkatalysators durch den direkten Einsatz der bei der Fermentation erhaltenen Biomasse entfallen (im Gegensatz zur Verwendung von isolierten Enzymen). Zudem erlaubt die Anwendung von Ganzzellkatalysatoren bei Redoxreaktionen die Durchführung der Reaktionen ohne Zusatz von externen Mengen an teurem Cofaktor (siehe W02005121350), wohingegen bei Reaktionen mit isolierten Enzymen ein Cofaktorzusatz erforderlich ist.

Gegenwärtig sind zur Aufarbeitung von Ganzzellkatalysatoren enthaltenden Biotransformations-Reaktionslösungen diverse Methoden bekannt. Ein allgemeines Problem dabei besteht in dem Auftreten von Emulsionen beim Extraktionsvorgang, einhergehend mit sehr langen, wirtschaftlich nicht akzeptablen Aufarbeitungszeiten, insbesondere Extraktions- und/oder Filtrationszeiten, von beispielsweise mehreren Stunden selbst im Labormaßstab bzw. sogar einer Nichttrennbarkeit solcher Mischungen, insbesondere infolge der Bildung von stabilen Emulsionen. Als ein typisches Beispiel hierfür kann die Veröffentlichung von G. Jörg, K. Leppchen, T. Daussmann, M. Bertau, Chem. Ing. Techn. 2004, 76, 1739-1742 angegeben werden, wonach die zentrale Komplikation bei extraktiver Aufarbeitung der Hochzelldichte-Ganzzellbiotransformation die Bildung stabiler Gele und Schleime im Kontakt mit dem organischen Lösungsmittel darstellt. Die entsprechende Konsequenz daraus ist die Notwendigkeit einer nachgeschalteten destillativen Reinigung des Produkts, und starke Ausbeuteverluste beim Downstream-Processing, einhergehend mit einer verringerten Gesamtökonomie des Verfahrens und hohen Produktionskosten.

Des weiteren weisen Yazbeck et al. (D. R. Yazbeck, C. A. Martinez, S. Hu, J. Tao, Tetrahedron: Asymmetry 2004, 15, 2757-2763) in einer Übersicht aus dem Jahre 2004 zu Downstream-Verfahren von Biotransformationslösungen auf die oftmals komplizierte Produktisolierung infolge des Auftretens von Emulsionen eingehend hin. Dabei wird bemerkt, dass nicht viele Anwender-freundliche Technologien zur Umgehung dieses Problems verfügbar sind und ein steigender Bedarf an besseren Wegen besteht, um das Downstream-Processing in solchen Systemen zu verbessern.

Entsprechend besteht allgemein ein hohes Interesse an Aufarbeitungsverfahren, die zu einer Vermeidung der oben genannten Limitierungen führen. Dabei konnten nachfolgend genannte Methoden bis *dato* entwickelt werden:

Um die bei der ganzzellkatalysierten Synthese von 2-Phenylethanol - selbst bei niedrigen Substrat- bzw. Produktkonzentrationen von <10 g/L auftretende - Bildung von Emulsionen zu vermeiden, verwenden Serp et al. Kunstharzimmobilisate, in denen ein organisches Lösungsmittel (Dibutylsebacat) eingeschlossen ist, zur Extraktion (D. Serp, U. von Stockar, I. W. Marison, Biotechnol. Bioeng. 2003, 82, 103-110). Das Produkt 2-Phenylethanol wird dabei in *situ* durch Aufnahme in die Kunstharzimmobilisate aus dem Reaktionsmedium entfernt. Allerdings ist diese Methode unter Verwendung von in Immobilisaten eingeschlossenen organischen Lösungsmitteln sehr aufwändig und kostenintensiv. Zudem sind die verwendeten Produktkonzentrationen in den Lösungen gering (<10 g/L).

In einer weiteren Aufarbeitungsmethode von Emulsionen, bestehend aus einer organischen Phase, wässrigen Phase und Ganzzellkatalysatoren, findet die Verwendung von mehreren, hintereinander geschalteten Hydrozyklonen statt (L.-Q. Yu, T. A. Meyer, B. R. Folsom, EP 900 113, 1999). Dabei erfolgt stets der Transfer des Überlaufs von einem Hydrozyklon auf den nächsten Hydrozyklon, wodurch die wässrige Phase von der organischen Phase und dem Biokatalysator getrennt werden kann. Allerdings erfordert diese Methode einen hohen apparativen Aufwand und ist entsprechend kostspielig.

Kürzlich wurde von Bertau et al. die Möglichkeit der Vermeidung von stabilen Gelen und Schleimen im Kontakt mit dem organischen Lösungsmittel durch den Einsatz geeigneter Enzyme als De-Emulgatoren aufgezeigt (G. Jörg, K. Leppchen, T. Daussmann, M. Bertau, Chem. Ing. Techn. 2004, 76, 1739-1742 und G. Jörg, K. Leppchen, T. Daussmann, M. Bertau, Biotechnol. Bioeng. 2004, 87, 525-536). Dabei konnte das Problem der Gelbildung durch aus dem Ganzzellkatalysator stammenden Bioemulgatoren, die von den Mikroorganismen in das Medium abgegeben werden, zurückgedrängt werden. Nachteilig allerdings ist die Notwendigkeit einer weiteren zusätzlichen enzymatischen Komponente, insbesondere wenn diese nur in aufwändiger Weise zugänglich ist. Ein weiteres Problem stellt das Auftreten von Nebenreaktionen, verursacht durch die zugegebenen Proteasen, dar (G. Jörg, K. Leppchen, T. Daussmann, M. Bertau, Chem. Ing. Techn. 2004, 76, 1739-1742). Dabei werden beispielsweise Ester-, aber auch Amidgruppen bevorzugt gespalten.

Alternativ wird über den Einsatz eines Filterhilfsstoffs nach durchgeführter Biotransformation von Hanson et al. berichtet (R. L. Hanson, S. Goldberg, A. Goswami, T. P. Tully, R. N. Patel, Adv. Synth. Catal. 2005, 347, 1073-1080). Gemäß diesem Verfahren erfolgt die Durchführung einer Reduktion eines organischen Ketonsubstrats mit einem Ganzzellkatalysator bei einem neutralen pH-Wert (pH 7) und einer Substratmenge von etwa 20 g/L Reaktionsvolumen unter Verwendung des preislich anspruchsvollen Filterhilfsstoffs Amberlite XAD-16 in 10facher Menge bezogen auf das eingesetzte organische Substrat. Während sich der Einsatz des Amberlite XAD-16 als geeignet erwies, erwies sich eine direkte Extraktion mit Ethylessigsäureethylester oder MTBE in Abwesenheit eines solchen Filterhilfsstoffes als nicht praktikabel und führte zu Emulsionsproblemen. Nachteilig bei der Methode von Hanson et al. sind jedoch als Limitierungen beispielsweise die hohen Einsatzmengen an dem zudem preislich anspruchsvollen Amberlite XAD-16 als Filterhilfsmittel von Faktor 10 bezogen auf die organische Komponente, selbst bei einem niedrigen Anteil an organischem Ketonsubstrat von lediglich etwa 20 g/L.

Die technische Aufgabe der vorliegenden Erfindung war es daher, ein schnelles, einfaches, kostengünstiges, effektives und auf preiswerten Lösungsmitteln bzw. Additiven basierendes und geringen apparativen Aufwand erforderndes Verfahren zur Aufarbeitung von aus Ganzzellbiotransformationen resultierenden Reaktionslösungen bereit zu stellen. Insbesondere war es die Aufgabe, ein Verfahren zur Aufarbeitung einer Reaktionslösung enthaltend Ganzzellkatalysatoren, eine wässrige Komponente und eine organischen Komponente mit einem Anteil von >50 g/L am Gesamtvolumen zur Verfügung zu stellen, sowie die oben genannten Nachteile des Stands der Technik zu vermeiden. In besonderem Maße sollte das Verfahren zur Aufarbeitung von aus Redoxreaktionen mit Ganzzellkatalysatoren resultierenden Reaktionslösungen, bei denen die organische Komponente zu >90%(m/m) aus einem enantiomerenangereicherten Alkohol besteht, geeignet sein.

Die technische Aufgabe wird gelöst durch ein Verfahren zur Aufarbeitung von Reaktionslösungen, enthaltend Ganzzellkatalysatoren, eine wässrige Komponente und eine organische Komponente, wobei die organische Komponente das anzureichernde Produkt enthält, mit den folgenden Schritten:
a) Einstellen des pH-Wertes auf kleiner 4;
b) Filtration der Reaktionslösung in Anwesenheit eines Filterhilfsstoffes, vorzugsweise in der Reaktionslösung;
c) optional: weitere Anreicherung und/oder Aufreinigung des in der organischen Komponente enthaltenen Produktes.

Überraschenderweise wurde festgestellt, dass durch Verringerung des pH-Wertes der Reaktionslösung auf kleiner 4 die Filtrationsrate der Reaktionslösung enorm gesteigert wird, wenn die Filtration zudem in Anwesenheit eines Filterhilfsstoffes durchgeführt wird. Dies ist insbesondere auch deshalb überraschend, weil sowohl bei Verringerung des pH-Wertes alleine (Beispiel 4 = Vergleichsbeispiel), als auch die Filtration in Anwesenheit eines Filterhilfsmittels ohne Herabsetzung des pH-Wertes (Beispiele 2,3 = Vergleichsbeispiele) nicht in zufriedenstellender Art und Weise eine Produktabtrennung / Produktaufarbeitung ausgehend von der bei der Ganzzell-katalysierten Reaktion resultierenden Emulsion gelingt. Der Filterhilfsstoff ist dabei vorzugsweise in der Reaktionslösung vorhanden. Er wird deshalb vorzugsweise vor der Filtration bereits zum Reaktionsgemisch zugegeben (vor oder nach Einstellen des pH-Wertes auf kleiner pH 4), wie beispielsweise in dem erfindungsgemäßen Beispiel 6 gezeigt. Alternativ kann aber auch - nach Einstellen des pH-Wertes des Reaktionsgemisches auf pH kleiner 4 - eine Filtration des Reaktionsgemisches über einen mit dem Filterhilfsstoff beladenen Filter erfolgen (siehe beispielsweise Beispiel 5).

Die Erfindung stellt somit ein schnelles, einfaches, kostengünstiges, effektives und auf preiswerten Lösungsmitteln bzw. Additiven basierendes Verfahren zur Aufarbeitung von aus Ganzzellbiotransformationen resultierenden Reaktionslösungen bereit, das nur einen geringen apparativen Aufwand erfordert. Insbesondere ist das erfindungsgemäße Verfahren zur Aufarbeitung einer Reaktionslösung enthaltend Ganzzellkatalysatoren, eine wässrige Komponente und eine organische Komponente mit einem Anteil von >50 g/L am Gesamtvolumen, und speziell zur Aufarbeitung von aus Redoxreaktionen mit Ganzzellkatalysatoren resultierenden Reaktionslösungen, bei denen die organische Komponente zu größer 90%(m/m) aus einem enantiomerenangereicherten Alkohol besteht, geeignet.

Ein bevorzugtes Verfahren weist weiterhin die folgenden Schritte auf:
b1) Waschen des bei der Filtration erhaltenen Filterkuchens mit einem organischen Lösungsmittel oder einem Gemisch organischer Lösungsmittel;
b2) optional: Extraktion der wässrigen Komponente des in Schritt a) erhaltenen Filtrates mit dem in Schritt b1) erhaltenen Filtrat oder einem neu zugegebenen organischen Lösungsmittel oder einem Gemisch organischer Lösungsmittel; und
b3) Entfernen des organischen Lösungsmittels aus der organischen Komponente.

Als organische Komponente in der aufzuarbeitenden Reaktionslösung wird hierbei das erwünschte Endprodukt einer Reaktion verstanden gegebenenfalls im Gemisch mit dem entsprechenden Ausgangsprodukt und/oder eventuell auftretender Nebenprodukte, wobei das Endprodukt beispielsweise ein optisch aktiver Alkohol ist, der nach einer von den Ganzzellkatalysatoren katalysierten Reaktion aus einem entsprechenden Keton erhalten wird. In der Regel liegt nach der

Reaktion in der organischen Komponente das gewünschte Endprodukt als Gemisch mit dem Ausgangsprodukt beispielsweise in einem Verhältnis von 95%:5% (m/m), 97%:3% (m/m) oder größer vor.

Weiterhin wird ein Verfahren bevorzugt, wobei die organische Komponente zu größer 90% (m/m), besonders bevorzugt zu größer 95% (m/m) aus einem optisch aktiven Alkohol besteht.

Insbesondere überwindet das erfindungsgemäße Verfahren die Probleme des Standes der Technik bei der Produktabtrennung von aufzuarbeitenden Reaktionslösungen, die eine Emulsion darstellen aus Ganzzellkatalysatoren, einer wässrigen Komponente und einer organischen Komponente enthaltend das anzureichernde Produkt.

Weiterhin ist bevorzugt, dass die Ganzzellkatalysatoren in der Reaktionslösung einen Anteil von bis 75 g/L, vorzugsweise von bis 50 g/L, besonders bevorzugt von bis 30 g/L und ganz besonders bevorzugt von bis 25 g/L (g bezogen auf das Feuchtgewicht der Biomasse) darstellen. Dabei wird ein Anteil an Ganzzellkatalysatoren in der Reaktionslösung von mindestens 10 g/L, insbesondere von mindestens 20 g/L (g bezogen auf das Feuchtgewicht der Biomasse) besonders bevorzugt.

Als Filterhilfsstoffe können alle bekannten Filterhilfsstoffe verwendet werden. In einem weiteren bevorzugten Verfahren ist der Filterhilfsstoff ausgewählt aus der Gruppe Cellulose, Kieselgel, Kieselgur, Perlit, Cristobalit, Filterquarzkies, Aktivkohle, Holzkohle, Holzmehl, Filterhilfsstoffe auf Kunstharz-Basis und Gemische derselben. Insbesondere ist die Verwendung von Kieselgur, Cristobalit und Filterquarzkies sowie Mischungen aus diesen Komponenten als Filterhilfsstoff bevorzugt. Ganz besonders bevorzugt wird der Filterhilfsstoff mit der Produktbezeichnung Celite Hyflo Supercel als Handelsname verwendet.

In einer bevorzugten Ausführungsform des erfindungsgemäßen Verfahrens wird die Reaktionslösung auf einen pH-Wert von pH kleiner 3, vorzugsweise pH 2 bis 3, und besonders bevorzugt pH 2.5 bis 3, eingestellt.

In weiteren Ausgestaltungen des Verfahrens wird als organisches Lösungsmittel zum Waschen des Filterkuchens und/oder Extrahieren der wässrigen Komponente MTBE (tert. Butylmethylether) und/oder ETBE (tert. Butylethylether) und/oder Essigsäureethylester verwendet.

In einem bevorzugten Verfahren beträgt der Anteil der organischen Komponente größer als 50 g/L, vorzugsweise größer als 100 g/L, am Gesamtvolumen der Reaktionslösung.

Die Erfindung wird anhand der folgenden Beispiele erläutert, die jedoch für den Schutzumfang nicht limitierend sind.

### Zusammenfassende Erläuterung der experimentellen Beispiele

Um die Probleme des Standes der Technik zu lösen wurden die folgenden Versuche durchgeführt:

Ein Vergleichsbeispiel stellt der folgende Versuch dar: Nach durchgeführter Biotransformation wurde - in Anlehnung an die Methode nach Hanson et al. (Adv. Synth. Catal. 2005, 347, 1073-1080)- ein Filterhilfsstoff eingesetzt. Dabei wurde - anstelle des bei Hanson et al. zum Einsatz kommenden Amberlite XAD-16 - der preislich attraktivere Filterhilfsstoff Celite Hyflo Supercel (= Handelsname) verwendet. Allerdings erwies sich diese Methode als nicht geeignet bei Anwendung auf Biotransformationen mit einem Anteil einer organischen Komponente von größer als 50 g/L (Beispiel 2 = Vergleichsbeispiel). Hierbei bildete sich nach der Durchführung der Biotransformationen im neutralen pH-Bereich (pH 6.5 - 7.0) eine stabile Emulsion, die nicht in praktikabler Weise durch den Einsatz von einem Filterhilfsstoff (in Form einer Celite-Schicht auf dem Filter) aufgearbeitet werden konnte und zu einer sehr langsamen Filtration mit einer Filtrationszeit von 6.5 Stunden führte, wobei zudem die nachfolgende Phasentrennung bei dem Extraktionsvorgang ebenfalls mit mehr als 5 Stunden sehr langsam verlief. Die erzielte Isolierausbeute lag zudem bei niedrigen 20.1 %.

Eine ebenso nichtzufriedenstellende, lange Filtrationszeit von 7 Stunden wird beobachtet, wenn der Filterhilfsstoff Celite Hyflo Supercel in die Reaktionslösung mit einem pH-Wert von 6.5 bis 7 eingerührt wird und anschließend das Gemisch filtriert wird (Beispiel 3 = Vergleichsbeispiel). Die erzielte Isolierausbeute war hierbei ebenfalls nicht zufriedenstellend und lag bei 55.4%.

Darüber hinaus ergab ein entsprechender Versuch ohne Einsatz eines Filterhilfsstoffs selbst bei einem auf pH 4 verminderten keine signifikante Filtration, so dass in diesem Fall die Filtration abgebrochen werden musste (Beispiel 4 = Vergleichsbeispiel).

Im Gegensatz dazu werden bei Durchführung der Aufarbeitung entsprechend dem erfindungsgemäßen Verfahren kurze Filtrationszeiten in Kombination mit hohen Isolierausbeuten erzielt (Beispiele 5 und 6). So wird beispielsweise eine Isolierausbeute von 79.2% erhalten, wenn der pH-Wert nach erfolgter Biotransformation zunächst auf pH 2.4 gestellt, das resultierende Reaktionsgemisch über einen mit ca. 0.5 cm Celite-Schicht (Celite Hyflo Supercel) beladenen Filter filtriert und anschließend mit einem organischen Solvens nachgewaschen und die wässrige Phase zudem extraktiv aufgearbeitet wird (Beispiel 5). Bei diesem Verfahren wird zudem eine kurze Filtrationszeit von weniger als 5 Minuten erzielt.

Eine ebenfalls hohe Isolierausbeute (78.4%) wird erhalten, wenn der pH-Wert nach der Biotransformation auf pH 2.6 gestellt, das Reaktionsgemisch mit Celite Hyflo Supercel versetzt und anschließend filtriert wird sowie der Filterkuchen mit einem organischen Solvens nachgewaschen und die wässrige Phase extraktiv aufgearbeitet wird (Beispiel 6). Zudem wird auch in diesem Beispiel 6 eine kurze Filtrationszeit von weniger als 5 Minuten erzielt.

### Experimentelle Beispiele:

### Beispiel 1 (Allgemeine Versuchsvorschrift zur Herstellung der Reaktionsmischung für die Aufarbeitungsversuche; 500 mM Substratkonzentration):

In einem Titrino-Reaktionsgefäß (Hersteller: Metrohm) werden zu 50 mL eines Phosphatpuffers (0.1M, eingestellt auf pH 7.0) bei Raumtemperatur der in W02005121350 beschriebene Ganzzellkatalysator *E.coli* DSM14459 (pNO5c,pNO8c), enthaltend eine (*R*)-Alkoholdehydrogenase *Lactobacillus kefir* und eine Glucosedehydrogenase aus *Thermoplasma acidophilum,* entsprechend einer Biomassenkonzentration von ca. 50 g/L (Beispiele 2 und 3) bzw. ca. 25 g/L (Beispiele 4 bis 6), D-Glukose (1.05 bis 6 Äquivalente bezogen auf Menge an eingesetztem p-Chloracetophenon) und 3.87 g p-Chloracetophenon (entsprechend einer Substratkonzentration von 0.5 M bezogen auf das Volumen an eingesetztem Phosphatpuffer) zugegeben. Die Reaktionsmischung wird 22 h bei Raumtemperatur gerührt, wobei der pH durch Zugabe von Natronlauge (2M NaOH) konstant in einem pH-Bereich von pH 6.5 bis 7.0 gehalten wird. In regelmäßigen Abständen werden Proben entnommen und der Umsatz mittels HPLC ermittelt. Nach einer Reaktionszeit von 22h beträgt der Umsatz zum Produkt (*R*)-(4-Chlorphenyl)ethan-1-ol mehr als 99%. Die Reaktionsmischung wird anschließend für die Aufarbeitungsversuche verwendet.

### Beispiel 2 (Vergleichsbeispiel):

Es wird die nach dem in Beispiel 1 beschriebenen Verfahren (doppelte Ansatzgröße) hergestellte Reaktionslösung (Emulsion) über einen Schott-Glasfilter mit einer Porenweite von 40 bis 200 µm, beladen mit einer ca. 0.5 cm starken Celite-Schicht (Celite Hyflo Supercel), unter Anlegen eines Vakuums filtriert. Dabei wird eine Filtrationszeit von 6.5 Stunden benötigt. Das - stark getrübte - Filtrat wird mit 3 x 50 mL MTBE extrahiert, wobei eine Mischphase entsteht, die eine sehr langsame Trennung von über 5 Stunden verursacht. Nach Trocknen der vereinigten organischen Phasen über Magnesiumsulfat, Filtration und anschließendem Entfernen des organischen Lösungsmittels im Vakuum (50 °C, Wasserstrahlvakuum) wird das gewünschte Produkt mit einer Isolierausbeute von 20.1 % erhalten.

### Beispiel 3 (Vergleichsbeispiel):

Es wird die nach dem in Beispiel 1 beschriebenen Verfahren hergestellte Reaktionslösung (Emulsion) mit 100 mL MTBE und 1.5 g Celite (Celite Hyflo Supercel) versetzt. Nach 5-minütigem Rühren wird anschließend unter Anlegen eines Vakuums filtriert. Dabei wird eine Filtrationszeit von 7 Stunden benötigt. Anschließend wird der Filterkuchen mit 50 mL MTBE nachgewaschen. Zu dem - stark getrübten - Filtrat wird die Waschlösung hinzugefügt und die resultierende Mischung wird mit 2 x 50 mL MTBE extrahiert. Nach Trocknen der vereinigten organischen Phasen über Magnesiumsulfat, Filtration und anschließendem Entfernen des organischen Lösungsmittels im Vakuum (50 °C, Wasserstrahlvakuum) wird das gewünschte Produkt mit einer Isolierausbeute von 55.4% erhalten.

### Beispiel 4 (Vergleichsbeispiel):

Es wird die nach dem in Beispiel 1 beschriebenen Verfahren (0.6-fache Ansatzgröße) hergestellte Reaktionslösung (Emulsion) mit konzentrierter Salzsäure bis zur Einstellung eines pH-Wertes von pH 4.0 versetzt, wobei die Biomasse ausflockt. Anschließend wird unter Anlegen eines Vakuums filtriert, wobei keine nennenswerte Filtration infolge einer Gelbildung erfolgte und entsprechend die Filtration abgebrochen wurde.

### Beispiel 5 (erfindungsgemäßes Beispiel):

Es wird die nach dem in Beispiel 1 beschriebenen Verfahren (0.6-fache Ansatzgröße) hergestellte Reaktionslösung (Emulsion) mit konzentrierter Salzsäure bis zur Einstellung eines pH-Wertes von pH 2.4 versetzt, wobei die Biomasse ausflockt. Anschließend wird über einen Filter unter Anlegen eines Vakuums filtriert, der beladen ist mit ca. 0.5 cm Celite-Schicht (Celite Hyflo Supercel), wobei eine sehr schnelle Filtration von weniger als 5 Minuten beobachtet wird. Anschließend wird der Filterkuchen mit 30 mL MTBE nachgewaschen und mit weiteren 45 mL zu dem getrübten Filtrat hinzugefügt. Dabei erfolgt eine gute Phasentrennung. Nach einer weiteren Extraktion mit 75 mL MTBE werden die vereinigten organischen Phasen über Magnesiumsulfat getrocknet, filtriert und anschließend im Vakuum vom organischen Lösungsmittel befreit (50 °C, Wasserstrahlvakuum), wobei das gewünschte Produkt mit einer Isolierausbeute von 79.2% erhalten wird.

### Beispiel 6 (erfindungsgemäßes Beispiel):

Es wird die nach dem in Beispiel 1 beschriebenen Verfahren hergestellte Reaktionslösung (Emulsion) mit konzentrierter Salzsäure bis zur Einstellung eines pH-Wertes von pH 2.6 versetzt, wobei die Biomasse ausflockt, und hierzu 2 g Celite (Celite Hyflo Supercel) zugegeben. Anschließend wird unter Anlegen eines Vakuums filtriert, wobei eine gute Filtration von weniger als 5 Minuten beobachtet wird. Anschließend wird der Filterkuchen mit 2 x 80 mL MTBE nachgewaschen und das (wässrige, erste) Filtrat mit den beiden organischen Waschphasen (2 x 80 mL) gewaschen, wobei jeweils eine gute Phasentrennung beobachtet wird. Die vereinigten organischen Phasen werden über Magnesiumsulfat getrocknet, filtriert und anschließend im Vakuum vom organischen Lösungsmittel befreit (50 °C, Wasserstrahlvakuum), wobei das gewünschte Produkt mit einer Isolierausbeute von 78.4% erhalten wird. Der Enantiomerenüberschuß des gebildeten Produkts beträgt mehr als 99.8% ee.

## Patentansprüche

1. Verfahren zur Aufarbeitung von Reaktionslösungen, enthaltend Ganzzellkatalysatoren, eine wässrige Komponente und eine organische Komponente, wobei die organische Komponente das anzureichernde Produkt enthält, **gekennzeichnet durch** die folgenden Schritte:
a) Einstellen des pH-Wertes auf kleiner 4;
b) Filtration der Reaktionslösung in Anwesenheit eines Filterhilfsstoffes, vorzugsweise in der _ Reaktionslösung.
c) optional: weitere Anreicherung und/oder Aufreinigung des in der organischen Komponente enthaltenen Produktes.

2. Das Verfahren nach Anspruch 1, weiterhin **gekennzeichnet durch** die folgenden Schritte:
b1) Waschen des bei der Filtration erhaltenen Filterkuchens mit einem organischen Lösungsmittel oder einem Gemisch organischer Lösungsmittel;
b2) optional: Extraktion der wässrigen Komponente des in Schritt a) erhaltenen Filtrates mit dem in Schritt b1) erhaltenen Filtrat oder einem neu zugegebenen organischen Lösungsmittel oder einem Gemisch organischer Lösungsmittel; und
b3) Entfernen des organischen Lösungsmittels aus der organischen Komponente.

3. Das Verfahren nach Anspruch 1 oder 2, **dadurch gekennzeichnet, dass** die organische Komponente zu mehr als 90% (m/m) aus einem optisch aktiven Alkohol besteht.

4. Das Verfahren nach irgend einem der Ansprüche 1 bis 3, **dadurch gekennzeichnet, dass** die aufzuarbeitende Reaktionslösung eine Emulsion darstellt, aus Ganzzellkatalysatoren, einer wässrigen Komponente und einer organischen Komponente enthaltend das anzureichemde Produkt.

5. Das Verfahren nach irgend einem der Ansprüche 1 bis 4, **dadurch gekennzeichnet, dass** die Ganzzellkatalysatoren in der Reaktionslösung einen Anteil von bis 75 g/L, vorzugsweise von bis 50 g/L, besonders bevorzugt von bis 30 g/L und ganz besonders bevorzugt von bis 25 g/L (g bezogen auf das Feuchtgewicht der Biomasse) darstellen.

6. Das Verfahren nach irgend einem der Ansprüche 1 bis 5, **dadurch gekennzeichnet, dass** ein Filterhilfsstoff verwendet wird ausgewählt aus der Gruppe Cellulose, Kieselgel, Kieselgur, Perlit, Aktivkohle, Holzkohle, Holzmehl, Filterhilfsstoffe auf Kunstharz-Basis und Gemische derselben.

7. Das Verfahren nach irgend einem der Ansprüche 1 bis 6, **dadurch gekennzeichnet, dass** als Filterhilfsstoff Kieselgur, Cristobalit und Filterquarzkies sowie Mischungen aus diesen Komponenten, besonders bevorzugt Celite Hyflo Supercel, verwendet wird.

8. Das Verfahren nach irgend einem der Ansprüche 1 bis 7, **dadurch gekennzeichnet, dass** die Reaktionslösung auf einen pH-Wert von pH kleiner 3, vorzugsweise pH 2 bis 3, und besonders bevorzugt pH 2.5 bis 3, eingestellt wird.

9. Das Verfahren nach irgend einem der Ansprüche 1 bis 8, **dadurch gekennzeichnet, dass** als organisches Lösungsmittel zum Waschen des Filterkuchens und/oder Extrahieren der wässrigen Komponente MTBE (tert. Butylmethylether) und/oder ETBE (tert. Butylethylether) und/oder Essigsäureethylester verwendet wird.

10. Das Verfahren nach irgend einem der Ansprüche 1 bis 9, **dadurch gekennzeichnet, dass** der organische Anteil einen Anteil von mehr als 50 g/L, vorzugsweise mehr als 100 g/L, am Gesamtvolumen der Reaktionslösung darstellt.

## Claims

1. Method for the processing of reaction solutions containing whole-cell catalysts, an aqueous component and an organic component, the organic component containing the product to be enriched, **characterized by** the following steps:
a) adjustment of the pH value to less than 4;
b) filtration of the reaction solution in the presence of a filter aid, preferably in the reaction solution;
c) optionally: further enrichment and/or purification of the product contained in the organic component.

2. The method according to claim 1, further **characterized by** the following steps:
b1) washing of the filter cake obtained during filtration with an organic solvent or a mixture of organic solvents;
b2) optionally: extraction of the aqueous component of the filtrate obtained in step a) with the filtrate obtained in step b1) or a newly added organic solvent or a mixture of organic solvents; and
b3) removal of the organic solvent from the organic component.

3. The method according to claim 1 or 2, **characterized in that** the organic component consists to more than 90% (w/w) of an optically active alcohol.

4. The method according to any one of the claims 1 to 3, **characterized in that** the reaction solution to be processed is an emulsion of whole-cell catalysts, an aqueous component and an organic component containing the product to be enriched.

5. The method according to any one of the claims 1 to 4, **characterized in that** the whole-cell catalysts in the reaction solution represent a proportion of up to 75 g/L, preferably up to 50 g/L, especially preferably up to 30 g/L and quite especially preferably up to 25 g/L (g relative to the wet weight of the biomass).

6. The method according to any one of the claims 1 to 5, **characterized in that** a filter aid is used, selected from the group comprising cellulose, silica gel, kieselguhr, perlite, activated carbon, charcoal, wood flour, filter aids based on synthetic resin and mixtures thereof.

7. The method according to any one of the claims 1 to 6, **characterized in that** kieselguhr, cristobalite and filter quartz gravel and mixtures of these components, especially preferably Celite Hyflo Supercel, are used as filter aid.

8. The method according to any one of the claims 1 to 7, **characterized in that** the reaction solution is adjusted to a pH value of pH below 3, preferably pH 2 to 3, and especially preferably pH 2.5 to 3.

9. The method according to any one of the claims 1 to 8, **characterized in that** MTBE (methyl tert-butyl ether) and/or ETBE (ethyl tert-butyl ether) and/or ethyl acetate are used as organic solvent for washing the filter cake and/or extracting the aqueous component.

10. The method according to any one of the claims 1 to 9, **characterized in that** the organic fraction represents a proportion of more than 50 g/L, preferably more than 100 g/L, of the total volume of the reaction solution.

## Revendications

1. Procédé pour le traitement de solutions réactionnelles contenant des catalyseurs à cellules entières, un composant aqueux et un composant organique, le composant organique contenant le produit à enrichir, **caractérisé par** les étapes suivantes :
a) réglage du pH au-dessous de 4 ;
b) filtration de la solution réactionnelle en présence d'un adjuvant de filtration, de préférence dans la solution réactionnelle ;
c) éventuellement : autre enrichissement et/ou autre purification du produit contenu dans le composant organique.

2. Procédé selon la revendication 1, **caractérisé en outre par** les étapes suivantes :
b1) lavage du gâteau de filtre obtenu lors de la filtration avec un solvant organique ou un mélange de solvants organiques ;
b2) éventuellement : extraction du composant aqueux du filtrat obtenu dans l'étape a) par le filtrat obtenu dans l'étape b1) ou un solvant organique nouvellement ajouté ou un mélange de solvants organiques ; et
b3) élimination du solvant organique du composant organique.

3. Procédé selon la revendication 1 ou 2, **caractérisé en ce que** le composant organique est constitué à raison de plus de 90% (m/m) d'un alcool optiquement actif.

4. Procédé selon l'une quelconque des revendications 1 à 3, **caractérisé en ce que** la solution réactionnelle à traiter représente une émulsion de catalyseurs à cellules entières, d'un composant aqueux et d'un composant organique, contenant le produit à enrichir.

5. Procédé selon l'une quelconque des revendications 1 à 4, **caractérisé en ce que** les catalyseurs à cellules entières dans la solution réactionnelle représentent une proportion allant jusqu'à 75 g/l, de préférence jusqu'à 50 g/l, de manière particulièrement préférée jusqu'à 30 g/l et de manière tout particulièrement préférée jusqu'à 25 g/l (g par rapport au poids humide de la biomasse).

6. Procédé selon l'une quelconque des revendications 1 à 5, **caractérisé en ce qu'**on utilise un adjuvant de filtration choisi dans le groupe formé par la cellulose, le gel silicique, les terres de diatomées, la perlite, le charbon actif, le charbon de bois, la farine de bois, les adjuvants de filtration à base de résine synthétique et les mélanges de ceux-ci.

7. Procédé selon l'une quelconque des revendications 1 à 6, **caractérisé en ce qu'**on utilise comme adjuvant de filtration des terres de diatomées, de la cristobalite, du gravier de quartz de filtration ainsi que des mélanges de ces composants, de manière particulièrement préférée le Celite Hyflo Supercel.

8. Procédé selon l'une quelconque des revendications 1 à 7, **caractérisé en ce que** la solution réactionnelle est réglée à un pH inférieur à 3, de préférence à un pH de 2 à 3, et de manière particulièrement préférée à un pH de 2,5 à 3.

9. Procédé selon l'une quelconque des revendications 1 à 8, **caractérisé en ce qu'**on utilise comme solvant organique pour le lavage du gâteau de filtre et/ou l'extraction du composant aqueux du MTBE (tert-butylméthyléther) et/ou de l'ETBE (tert-butyléthyléther) et/ou de l'ester éthylique de l'acide acétique.

10. Procédé selon l'une quelconque des revendications 1 à 9, **caractérisé en ce que** la proportion organique représente une proportion supérieure à 50 g/l, de préférence supérieure à 100 g/l, par rapport au volume total de la solution réactionnelle.
